# EUROPEAN PATENT APPLICATION

(11) **EP 4 578 745 A1**
(43) Date of publication of application: **02.07.2025**
(21) Application number: 23871954.6
(22) Date of filing: 14.09.2023
(51) Int. Cl.: B60R 21/36

(54) **PEDESTRIAN PROTECTION AIRBAG APPARATUS**

(30) Priority: 29.09.2022 JP 2022157161
(71) Applicant: Autoliv Development AB, 44783 Vargarda (SE)
(72) Inventor: ARAYA, Shoki, Yokohama-shi, Kanagawa 222-8580 (JP); HARADA, Tomoaki, Yokohama-shi, Kanagawa 222-8580 (JP)
(74) Representative: Müller Verweyen
(86) International application number: PCT/JP2023/033493
(87) International publication number: WO 2024/070721

(57) **Abstract**

[Problem]

The present invention provides a pedestrian protection airbag device that can reliably and quickly deploy an airbag in a desired direction.

RESOLUTION MEANS

The protective airbag device of the present invention includes an airbag that deploys from a boundary part between a hood and windshield of a vehicle to protect pedestrians and the like that collide with the vehicle; and a flap that is provided on the outer periphery of the airbag that is folded that can control the direction in which the airbag deploys. The flap has a weakened portion that breaks or opens as the airbag expands and deploys so that the airbag can deploy in a desired direction.

## Description

### TECHNICAL FIELD

The present invention relates to a pedestrian protection airbag device that protects pedestrians and cyclists who are hit by a vehicle.

### BACKGROUND ART

Providing a vehicle with one or a plurality of airbag devices in order to protect an occupant therein in the event of a vehicle accident is well known. Airbag devices come in a variety of forms, including a driver's airbag device that expands an airbag near the center of the steering wheel of the vehicle to protect the driver, a curtain airbag device that expands an airbag downward inside the window of the vehicle to protect the occupant in the event of a lateral impact or rollover or rollover accident, and a side airbag device that expands an airbag between the occupant and a side panel to protect the occupant in the event of a lateral impact on the vehicle. There is also a pedestrian protection airbag device that protects pedestrians and cyclists who are hit by a vehicle.

Some pedestrian protection airbag devices have an airbag compressed into a rod shape and are arranged to extend laterally (in the vehicle width direction) near the boundary between the hood and the windshield of the vehicle. In such pedestrian protection airbag devices, the direction in which the airbag deploys is difficult to control, and there is a risk that the airbag will not deploy quickly in the desired direction.

For example, even if the desire is to quickly deploy an airbag over the hood, the airbag may deploy upward in the initial stage of deployment, causing a momentary delay before the airbag assumes the appropriate deployed shape along the hood.

### RELATED ART DOCUMENTS

### Patent Documents

Patent Document 1: Japanese Unexamined Patent Application 2003-200800

### SUMMARY OF THE INVENTION

### PROBLEM TO BE SOLVED BY THE INVENTION

In light of the circumstances described above, an object of the present invention is to provide a pedestrian protection airbag device that can reliably and quickly deploy an airbag in a desired direction.

In particular, an object of the present invention is to provide a pedestrian protection airbag device that can reliably protect pedestrians and cyclists by quickly deploying an airbag onto the hood.

### MEANS FOR SOLVING THE PROBLEM

In order to resolve the problems described above, a protective airbag device of the present invention includes an airbag that deploys from a boundary part between a hood and windshield of a vehicle to protect pedestrians and the like that collide with the vehicle; and a flap that is provided on the outer periphery of the airbag that is folded that can control the direction in which the airbag deploys. The flap has a weakened portion that breaks or opens as the airbag expands and deploys so that the airbag can deploy in a desired direction.

In the specification and claims of the present application, the direction in which a vehicle travels straight ahead is referred to as "forward", and the opposite direction is referred to as "back", and the coordinate axis is referred to as the "front-to-back direction." Additionally, "right side" and "left side" when facing forward, refer to the right and left sides in the width direction of the vehicle, which is perpendicular to the vehicle's direction of travel, and the coordinate axis is referred to as the "left-right direction" or "left-right width direction".

In the invention described above, the objects to be protected by the airbag are "pedestrians, and the like", and the objects to be protected include not only pedestrians but also people riding bicycles (cyclists).
A "windshield" may be called a "front glass". The "hood" is sometimes called a "bonnet".

In addition, "folded" is a concept including at least a state of being folded in an accordion shape and a state of being rolled.

According to the present invention configured as described above, the flap retains the compressed (rolled or folded) airbag and provides a weak part in the deployment direction, enabling reliable deployment of the airbag in the desired direction. In other words, by adjusting the position of the weakened part, the deployment direction of the airbag can be appropriately controlled. In addition, by adjusting the degree of weakness of the weak part, timing of the airbag deployment can be controlled. For example, if the weakened part is designed to be difficult to break, the timing of full deployment of the airbag can be delayed. Conversely, if the weakened part is designed to break easily, the timing of full deployment of the airbag can be advanced.

The flap is a cloth-like member made of a flexible material, and can be made of, for example, the same or similar fabric as the airbag. In addition, the shape of the flap can be rectangular, trapezoidal, or other shapes depending on the location on the airbag to which the flap is connected and the shape of the airbag itself.

The weakened part may be formed in the vicinity of a back end of the airbag. The "rear region" may be a region on the windshield side opposite to the front side of the vehicle.

By forming the fragile part of the flap that retains the airbag near the rear region of the folded or rolled airbag, the airbag can be reliably deployed outward from the gap between the hood and the windshield without being hindered from deploying due to interference with the hood.

The airbag may include a main chamber that can be deployed forward onto the hood from the boundary part, where the flap is configured to retain the main chamber without breaking or opening the weak portion until the main chamber reaches the hood as the airbag deploys.

Here, "until reaching the hood" does not necessarily mean that the entire main chamber is completely mounted on the hood, but also means that the main chamber is raised to a position on the hood that does not interfere with the forward deployment thereof.

By configuring the flap so that the weakened part is not broken or opened until the main chamber reaches above the hood, the main chamber can be quickly and reliably pushed above the hood.

The weakened part may be formed near a front region of the main chamber of the folded airbag.

Here, "vicinity of the front region of the airbag" means a location corresponding to the front end of the airbag facing the front of the hood, but does not necessarily have to be the tip end.

The weakened part may be formed on an upper surface part of the main chamber of the folded airbag.

The weakened part may be a slit or a breakable sewing line.

The flap may be configured to retain the airbag, including the vicinity of the center of the airbag in the vehicle width direction.

The airbag may further include a sub-chamber connected to a lower part of the main chamber and deployed prior to the main chamber.

The sub-chamber and the main chamber may be in fluid communication with each other through an inner vent.

The sub-chamber may have a smaller volume than the main chamber and may be configured to deploy under the hood.

By minimizing the volume of the sub-chamber, the sub-chamber can be deployed quickly.

The main chamber may be rolled or folded in a front-to-back direction, and front and rear edges of the flap may be connected to front and rear edges of the sub-chamber by sewing.

The main chamber in a rolled or folded state may be surrounded in the front-to-back direction by the flap and the sub-chamber.

The flap may be configured to surround the main chamber and the sub-chamber in a rolled or folded state over the entire periphery in the front-to-back direction.

An area of a front region of the main chamber that is deployed onto the hood may be larger than an area of an upper region of the main chamber that is deployed onto the windshield, and the front region and the upper region may be rolled or folded separately.

The main chamber and the sub-chamber are preferably folded or rolled separately.

By folding or rolling the main chamber and the sub-chamber independently, the main chamber does not obstruct expansion and deployment of the sub-chamber, which expands and deploys first, allowing the sub-chamber to deploy smoothly and quickly.

Note that in the present invention, the airbag is configured to deploy from the boundary part between the hood and windshield of the vehicle, and the deployment of the airbag itself can enlarge the gap at the boundary part. Alternatively, a lifter may be provided to push up the back portion of the hood in order to enlarge the gap at the boundary between the hood and the windshield.

### BRIEF DESCRIPTION OF THE DRAWINGS

FIG. 1 is a top view depicting a pedestrian protection airbag device according to the present invention in an activated (deployed) state;
FIG. 2 is a plan view depicting the structure of an airbag of the pedestrian protection airbag device according to Embodiment 1 of the present invention, where (A) is a top view and (B) is a bottom view;
FIG. 3 is a plan view depicting a panel structure of the airbag according to Embodiment 1 of the present invention;
FIGS. 4(A) and 4(B) are plan views depicting a method of manufacturing the pedestrian protection airbag device (method of compressing the airbag) according to Embodiment 1 of the present invention;
FIG. 5 is a plan view and a cross-sectional view depicting a method for manufacturing the pedestrian protection airbag device according to Embodiment 1 of the present invention (a method for compressing an airbag, continued from FIG. 4);
FIGS. 6A and 6B are a plan view and a cross-sectional view depicting a method for manufacturing the pedestrian protection airbag device according to Embodiment 1 of the present invention (a method for compressing an airbag, continued from FIG. 5);
FIGS. 7(A) and 7(B) are cross-sectional views depicting the deployment behavior of the pedestrian protection airbag according to Embodiment 1 of the present invention;
FIGS. 8(A) and 8(B) are cross-sectional views depicting the deployment behavior of the pedestrian protection airbag according to Embodiment 1 of the present invention;
FIGS. 9(A) and 9(B) are perspective views depicting the deployed state of the pedestrian protection airbag according to Embodiment 1 of the present invention;
FIG. 10 is a cross-sectional view depicting the stowed state of the pedestrian protection airbag according to Embodiment 2 of the present invention;
FIG. 11 is a plan view depicting the structure of an airbag of the pedestrian protection airbag device according to Embodiment 3 of the present invention, where (A) is a top view and (B) is a bottom view;
FIG. 12 is a plan view depicting a panel structure of the airbag according to Embodiment 3 of the present invention;
FIGS. 13(A) and 13(B) are plan views depicting a method of manufacturing the pedestrian protection airbag device (method of compressing the airbag) according to Embodiment 3 of the present invention;
FIG. 14 is a plan view and a cross-sectional view depicting a method for manufacturing the pedestrian protection airbag device according to Embodiment 3 of the present invention (a method for compressing an airbag, continued from FIG. 13); and
FIGS. 15(A) and 15(B) are a plan view and a cross-sectional view depicting a method for manufacturing the pedestrian protection airbag device according to Embodiment 3 of the present invention (a method for compressing an airbag, continued from FIG. 14).

### DESCRIPTION OF THE PREFERRED EMBODIMENTS

An embodiment of the present invention will be described with reference to the accompanying drawings below.

### (Embodiment 1)

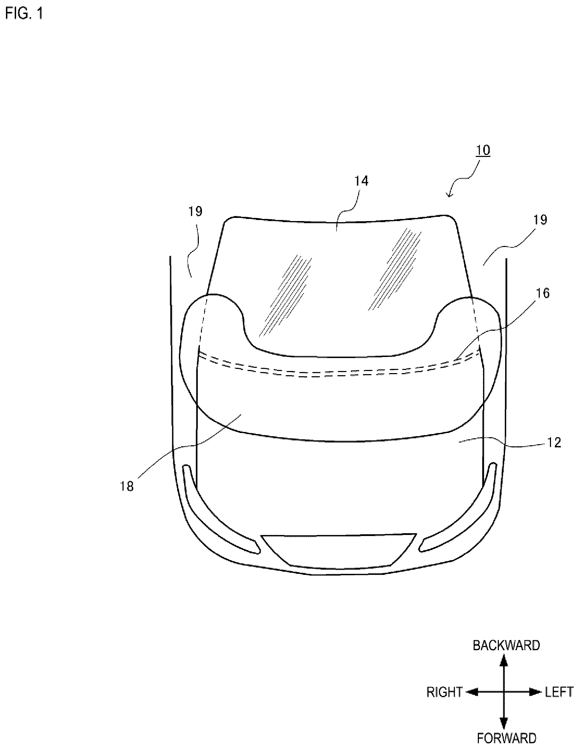

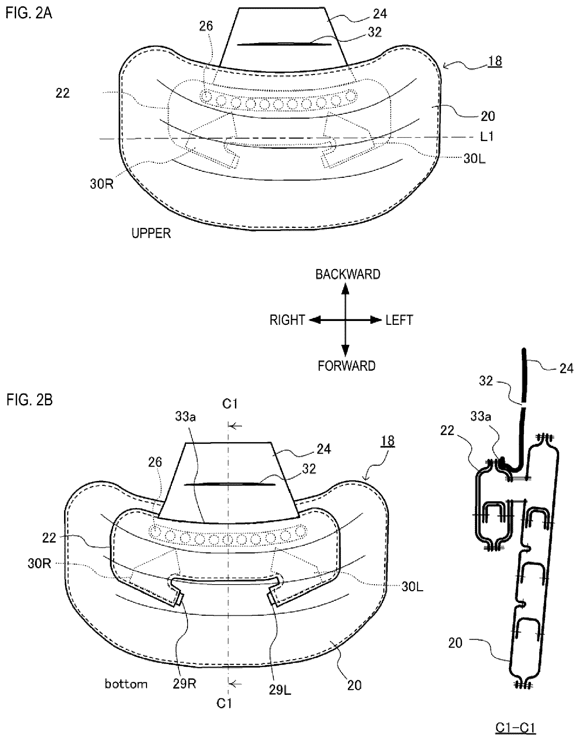

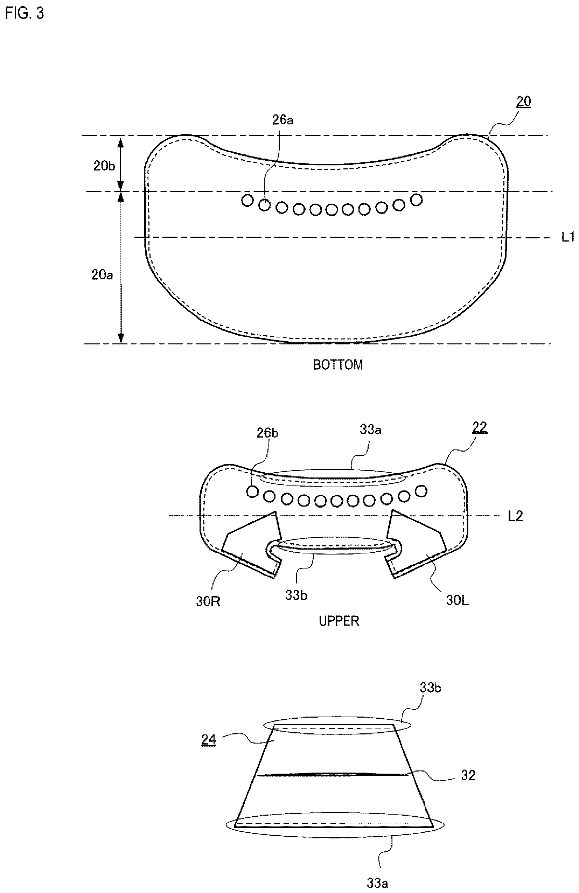

FIG. 1 is a top view depicting a pedestrian protection airbag device according to the present invention in an activated (deployed) state. FIG. 2 is a plan view depicting the structure of an airbag of the pedestrian protection airbag device according to Embodiment 1 of the present invention, where (A) is a top view and (B) is a bottom view. FIG. 3 is a plan view depicting a panel structure of the airbag according to Embodiment 1 of the present invention.

The protective airbag device of the present Embodiment includes an airbag 18 that deploys from a boundary part 16 between the hood 12 and windshield 14 of the vehicle 10 to protect pedestrians and the like that collide with the vehicle 10; and a flap 24 that is provided on the outer periphery of the airbag 18 that is folded that can control the direction in which the airbag 18 deploys. The airbag 18 includes a main chamber 20 that can be deployed forward over the hood 12 from the boundary part 16. The flap 24 is configured to be able to restrict the main chamber 20 from expanding upward.

As depicted in FIGS. 2 and 3, the airbag 18 includes a main chamber 20 and a sub-chamber 22 that is connected to a lower part of the main chamber 20 and deploys prior to the main chamber 20.

As depicted in FIG. 2, when the airbag 18 is laid flat, the sub-chamber 22 is connected to the main chamber 20 in a state offset backward with respect to a center line L1 in the front-to-back direction.

As depicted in FIG. 3, the main chamber 20 includes a front region 20a that extends forward on the hood 12 and an upper region 20b that extends upward along the windshield 14. In the main chamber 20, the surface area of the front region 20a is larger than the surface area of the upper region 20b. Furthermore, the left and right end parts of the upper region 20b protrude upward so as to cover a part of a A-pillar 19 (see FIG. 1). Note that the proportion of the surface area of the front region 20a to the surface area of the upper region 20b can be appropriately changed depending on the type of vehicle in which the airbag device is mounted. For example, in the case of a truck, SUV, or the like in which the windshield 14 is disposed at an angle close to vertical, the surface area of the upper region 20b can be made larger than that of the front region 20a.

The lower surface of the main chamber 20 is formed with a plurality of vent holes 26 for fluid communication with the sub-chamber 22. An inner vent 26 is formed through combination with a vent hole 26b formed in the upper surface of the sub-chamber 22. Furthermore, the periphery of the vent hole 26b of the main chamber 20 and the periphery of the vent hole 26b of the sub-chamber 22 are connected by sewing.

As depicted in FIG. 3, in the main chamber 20 laid flat, the row of vent holes 26a is arranged backward (upward in the figure) with respect to the center L1 in the front-to-back direction. Similarly, with the sub-chamber 22 laid flat, the row of vent holes 26b is located backward (upward in the figure) with respect to a center L2 in the front-to-back direction.

The sub-chamber 22 is formed to have a smaller volume than the main chamber 20. By keeping the volume of the sub-chamber 22 to the minimum necessary, the sub-chamber 22 can be expanded quickly.

As depicted in FIG. 2 and FIG. 3, the sub-chamber 22 is provided with diffusers 30L and 30R for efficiently guiding the gases discharged from the inflators 29L and 29R into the sub-chamber 22.

As depicted in FIG. 3, the flap 24 is formed in a trapezoid shape with a wider width on one side (back side in drawing), and has a slit 32 formed near the center thereof extending in the left-right direction. With the present invention, the slit 32 may be replaced by breakable stitching lines. The slit 32 (weakened parts) must break or open as the airbag 18 deploys.

In the state shown in FIG. 2, one edge of the flap 24 in the front-to-back direction (wider edge in the drawing) is connected by sewing to a connection point 33a near the rear edge of the sub-chamber 22. When the airbag 18 is folded, the other edge of the flap 24 in the front-to-back direction (the narrower edge in the drawing) is sewn to the front edge of the sub-chamber 22 at a connection point 33b.

The flap 24 is a cloth-like member made of a flexible material, and can be made of, for example, the same or similar fabric as the airbag 18. In addition, the shape of the flap 24 can be a shape other than a trapezoid (for example, a rectangle, a square, a triangle, an oval, or the like) depending on the location on the airbag to which the flap is connected and the shape of the airbag itself.

The slit 32 in the flap 24 is configured to maintain the compressed form of the main chamber 20 without the flap breaking or opening until the main chamber 20 reaches above the hood 12 as the airbag 18 deploys. Here, in order to prevent the flap 24 from interfering with the forward deployment of the main chamber 20 on the hood 12, for example, a portion of the flap may be folded back so as not to be broken only by the expansion and deployment of the sub-chamber 22 but to be broken when the main chamber starts to expand and deploy.

The slit 32 of the flap 24 is configured to maintain the compressed state of the main chamber 20 without breaking or opening until the main chamber 20 reaches above the hood 12 as the airbag 18 deploys. It is important here that the flap 24 does not interfere as the main chamber 20 unfolds forward over the hood 12.

### (Airbag folding process)

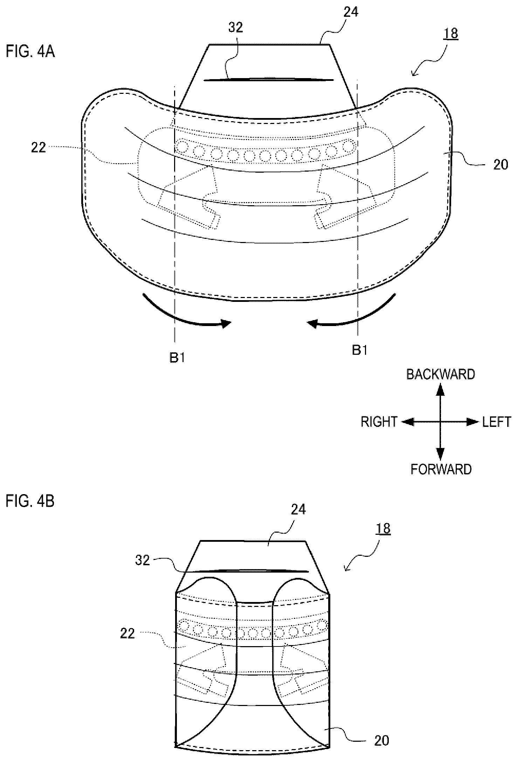

Next, the process of folding the airbag 18 according to the present Embodiment will be described. FIGS. 4(A), 4(B), FIG. 5, and FIGS. 6(A) and 6(B) are plan views and cross-sectional views depicting a method for manufacturing a pedestrian protection airbag device (a method for compressing the airbag) according to Embodiment 1 of the present invention.

As depicted in FIG. 4(A), the outer periphery of the sub-chamber 22 is sewn to the main chamber 20, and the periphery of the vent holes 26 (26a, 26b) of the sub-chamber 22 and the main chamber 20 are sewn together, thereby connecting the sub-chamber 22 and the main chamber 20. In addition, one edge part of the flap 24 is sewn to the back edge of the sub-chamber 22.

Next, as depicted in FIG. 4(B), the left and right sides of the airbag 18 (mainly the main chamber 20) are folded inward along the folding lines B1. Here, the folding line B1 is positioned outside the vent hole 26.

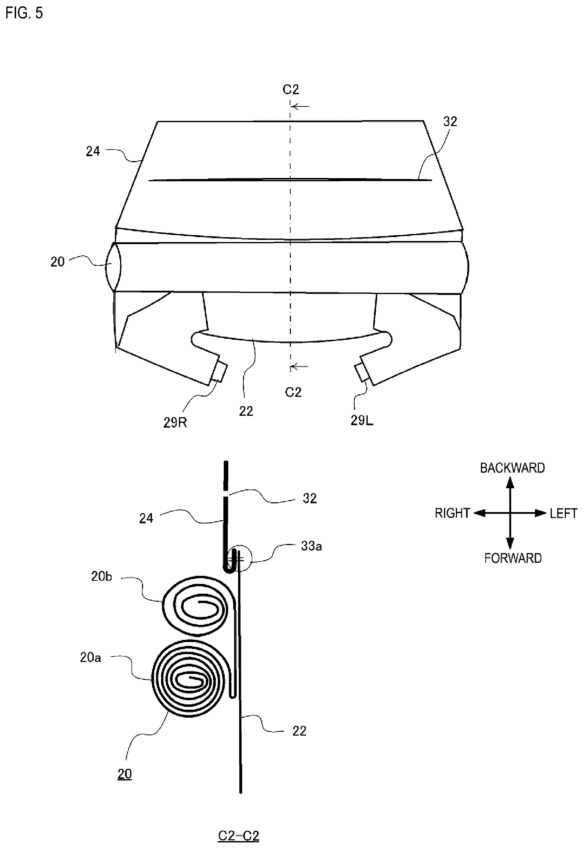

Next, as depicted in FIG. 5, the main chamber 20 is compressed by rolling from the front and back. Here, since the main chamber 20 is wider at the front than the sub-chamber 22, the diameter of the roll on the front side is larger than the diameter of the roll on the back side.

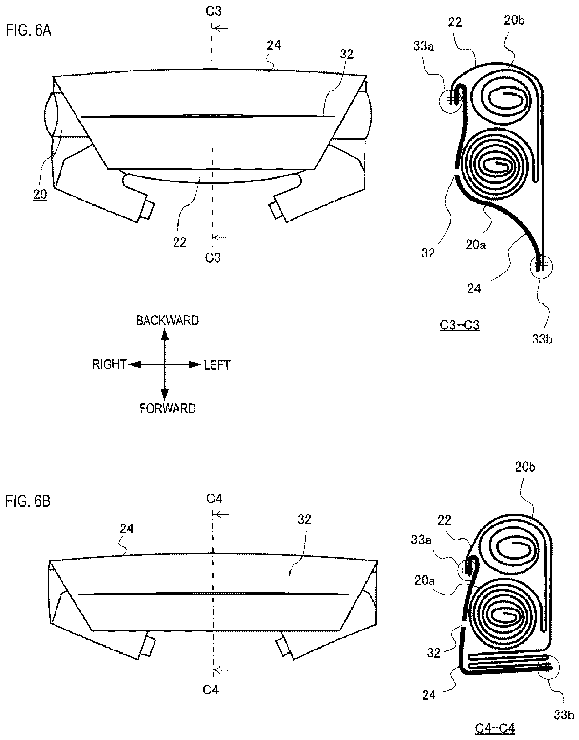

Next, as depicted in FIG. 6(A), the flap 24 is placed over the rolled main chamber 20 and sewn to the front end of the sub-chamber 22. As a result, the roll-shaped main chamber 20 is enveloped from the front-to-back direction by the flap 24 and the sub-chamber 22.

Next, as depicted in FIG. 6B, the front portion of the sub-chamber 22 is folded in an accordion-like manner.

### (Airbag Deployment Behavior)

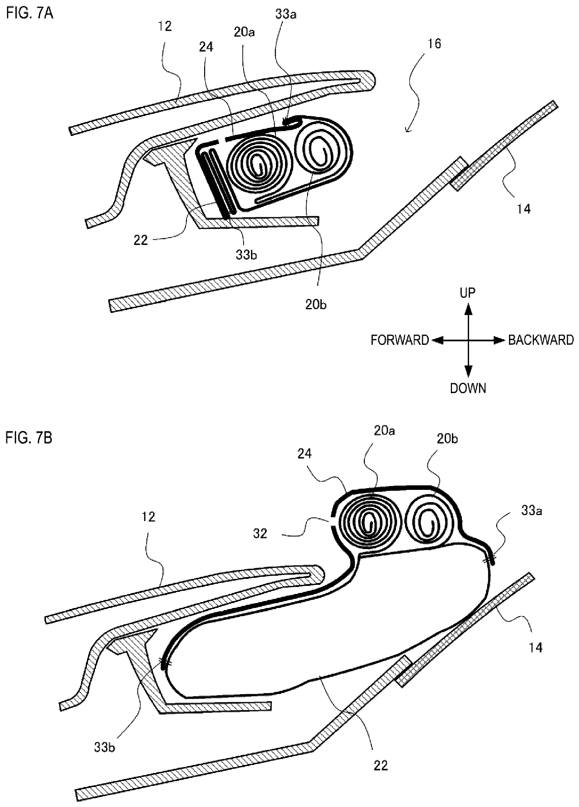

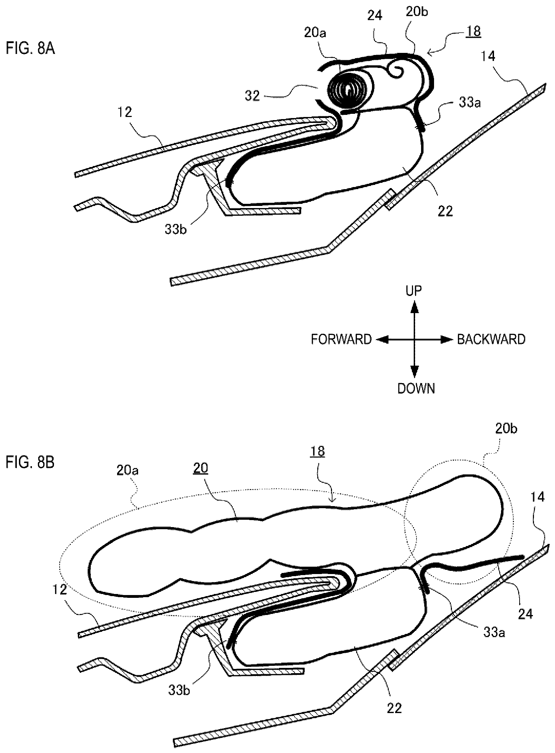

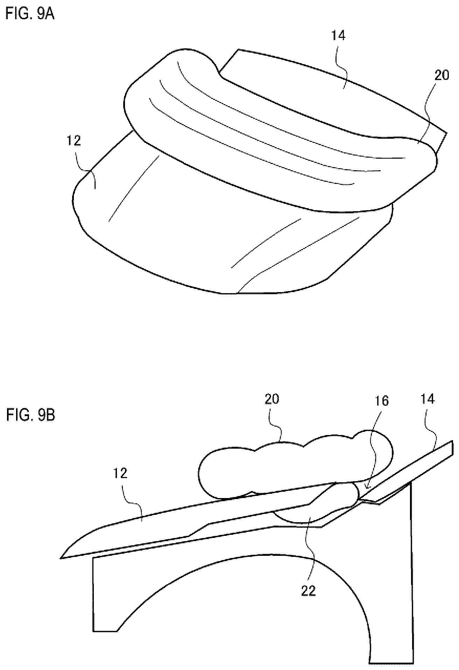

FIGS. 7(A), 7(B), and FIGS. 8(A), 8(B) are cross-sectional views depicting the deployment behavior of the pedestrian protection airbag 18 according to Embodiment 1 of the present invention. FIGS. 9(A) and 9(B) are perspective views depicting the deployed state of the pedestrian protection airbag according to the present invention.

FIG. 7(A) depicts the state before the airbag device is deployed. When the vehicle 10 is in a collision, expansion gas is supplied from the inflators 29L, 29R (see FIG. 2 and FIG. 5) to the sub-chamber 22 via the diffusers 30L, 30R. Then, as depicted in FIG. 7(B), the sub-chamber 22 expands and develops so as to push the main chamber 20 upward. At this time, the front portion of the sub-chamber 22 receives a reaction force from a member such as the housing and deploys backward.

As the sub-chamber 22 expands, the portion corresponding to the main chamber 20 reaches above the hood 12, but the slit 32 in the flap 24 is not broken or opened. In this state, the slit 32 is located approximately at the front end of the main chamber 20.

When the expansion gas flows from the sub-chamber 22 into the main chamber 20, the slit 32 in the flap 24 begins to open as depicted in FIG. 8(A), but the flap 24 still restricts the main chamber 20 from expanding upward.

When the expansion gas further flows into the main chamber 20, the flap 24 breaks at the slit 32, as depicted in FIG. 8(B), and the main chamber 20 deploys widely forward. The state in which the airbag 18 (20, 22) is fully deployed is depicted in FIGS. 9(A), (B).

In the present Embodiment, the flap 24 restricts the upward deployment of the main chamber 20, and the main chamber 20 tends to deploy forward rather than upward, so that the main chamber 20 can be deployed quickly onto the hood 12.

Note that in the present Embodiment, when the airbag 18 deploys from the boundary part 16 between the hood 12 and the windshield 14 of the vehicle, the deployment of the airbag 18 itself expands the gap at the boundary part 16. However, the present invention is not limited to this configuration, and a lifter that pushes up the rear portion of the hood 12 may be provided to enlarge the gap at the boundary part 16 between the hood 12 and the windshield 14.

### (Embodiment 2)

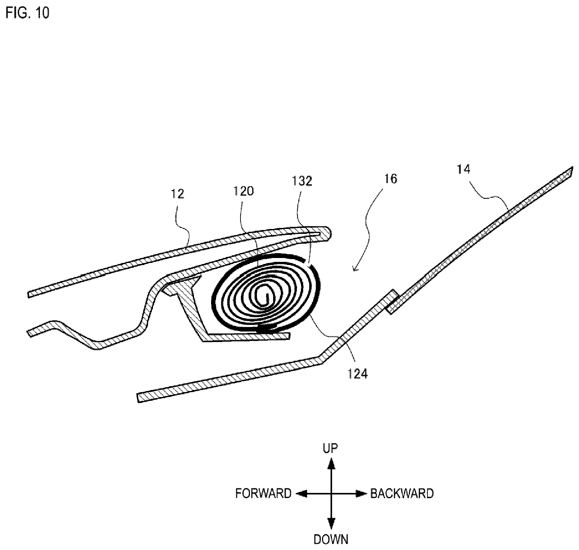

FIG. 10 is a cross-sectional view depicting the stowed state of the pedestrian protection airbag according to Embodiment 2 of the present invention. In FIG. 10, components identical or corresponding to those of the abovementioned Embodiment 1 are labeled with identical symbols, with redundant descriptions thereof omitted.

The airbag 120 according to the present Embodiment is a single airbag and is held by a flap 124 in a rolled or folded state. A slit 132 is formed as a weakened part in a rear portion of the flap 124. By forming the slit 132 in the vicinity of the rear region of the folded or rolled airbag 120, interference with the hood 12 is minimized when the airbag 120 deploys, and the airbag 120 can reliably deploy outward from the gap 16 between the hood 12 and the windshield 14.

In addition, the airbag 120 may be folded or rolled into two regions (20a, 20b) as in Embodiment 1.

### (Embodiment 3)

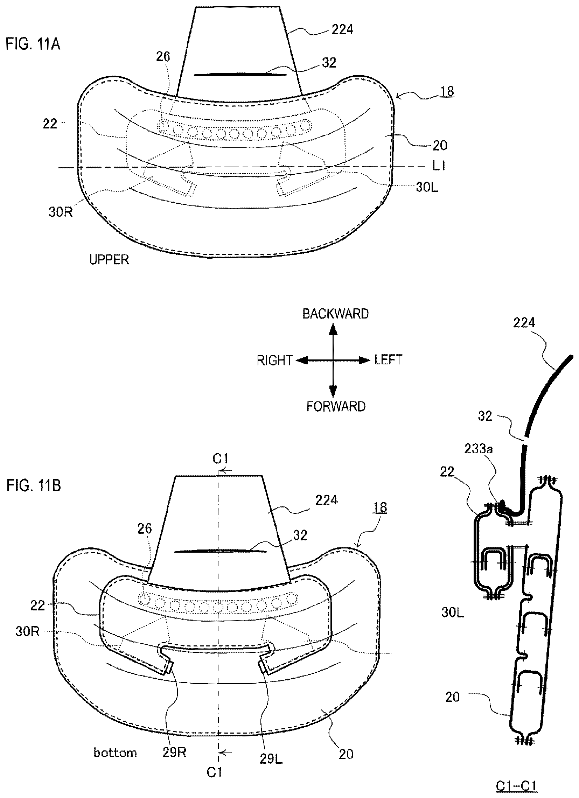

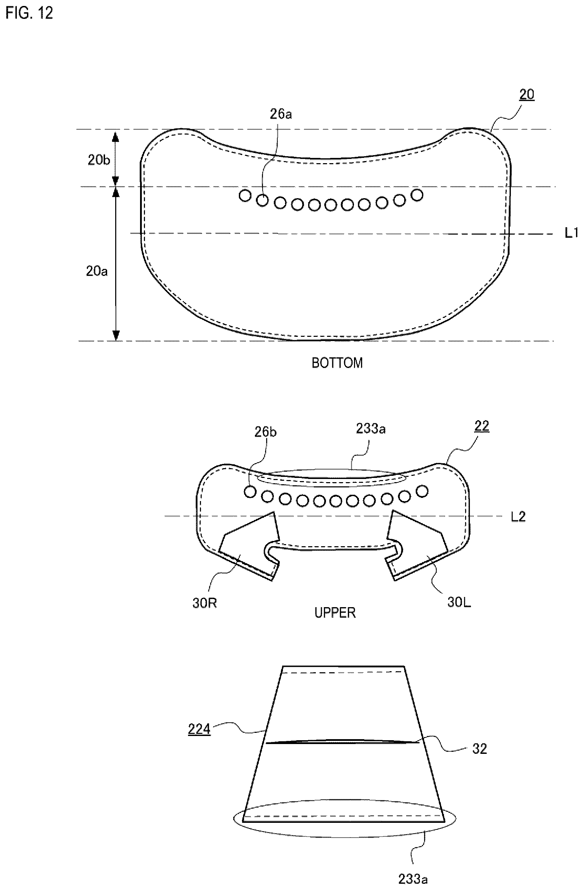

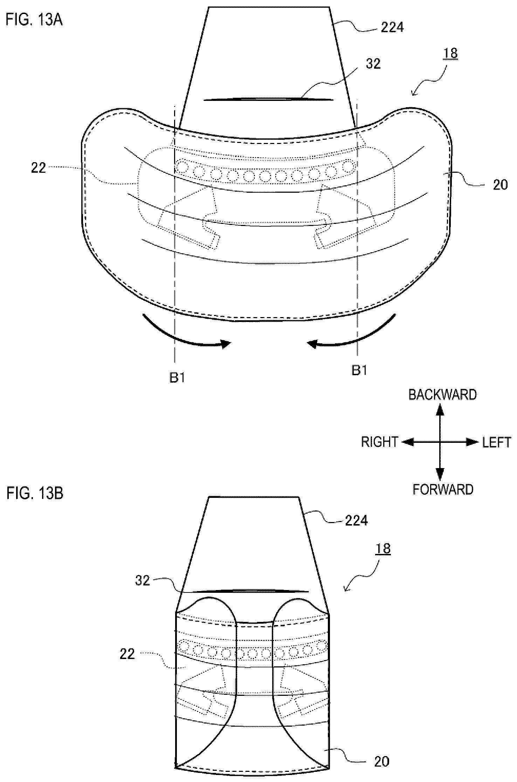

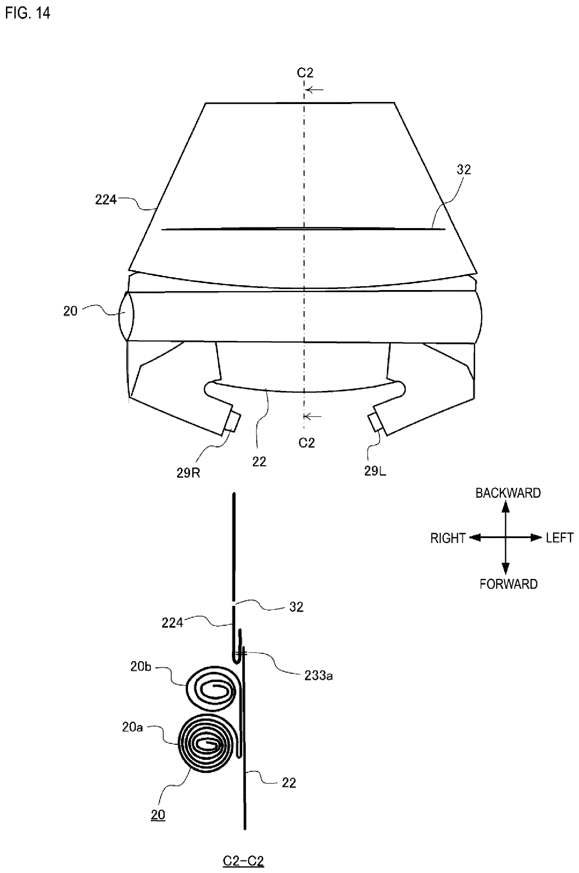

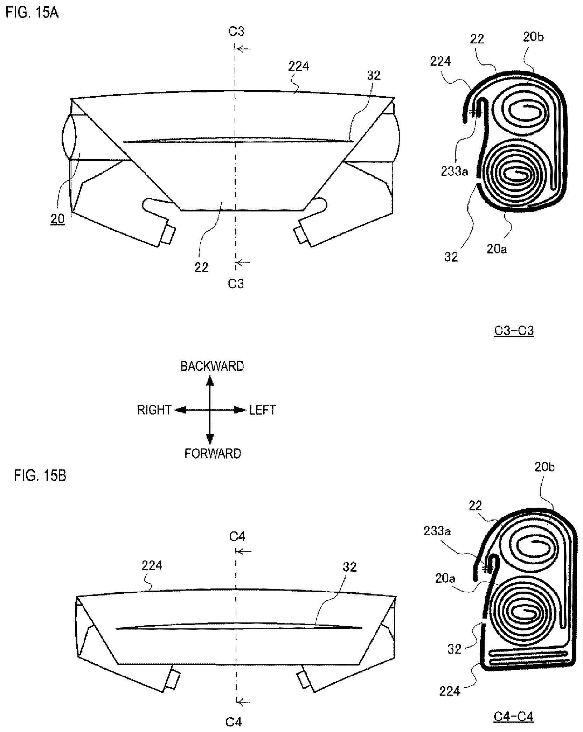

FIG. 11 is a plan view depicting the structure of an airbag of the pedestrian protection airbag device according to Embodiment 3 of the present invention, where (A) is a top view and (B) is a bottom view. FIG. 12 is a plan view depicting a panel structure of the airbag according to Embodiment 3 of the present invention. FIGS. 13(A) and 13(B) are plan views depicting a method of manufacturing the pedestrian protection airbag device (method of compressing the airbag) according to Embodiment 3 of the present invention. FIG. 14 is a plan view and a cross-sectional view depicting a method for manufacturing the pedestrian protection airbag device according to Embodiment 3 of the present invention (a method for compressing an airbag, continued from FIG. 13). FIGS. 15(A) and 15(B) are a plan view and a cross-sectional view depicting a method for manufacturing the pedestrian protection airbag device according to Embodiment 3 of the present invention (a method for compressing an airbag, continued from FIG. 5).

FIG. 11 to FIG. 15 correspond to FIG. 2 to FIG. 6 depicting the Embodiment 1. Embodiment 3 differs from Embodiment 1 in the structure of the flap 24 itself and the manner of connection between the flap 24 and the airbag 18, but the other portions are the same; therefore, only the differences will be described.

A flap 224 according to the present Embodiment has a longer length in the front-to-back direction than the flap 24 of Embodiment 1. In the state depicted in FIG. 11, one edge of the flap 224 in the front-to-back direction (wider edge in the drawing) is connected by sewing to a connection point 233a near the rear edge of the sub-chamber 22.

As depicted in FIG. 15, in a state in which the main chamber and the sub-chamber 22 are folded, the other edge part of the flap 224 in the front-to-back direction (the edge portion having a smaller width in the drawing) is in a free state and is not sewn to the sub-chamber 22. Here, the flap 224 is configured to surround the main chamber 20 and the sub-chamber 22 in the rolled or folded state over the entire circumference in the front-to-back direction.

Although the present invention has been described with reference to embodiments, the present invention is not limited in any way to these embodiments, and can be changed as appropriate within the scope of the technical concept of the present invention.

## Claims

1. A pedestrian protection airbag device, comprising:
an airbag that deploys from a boundary part between a hood and a windshield of a vehicle to protect a pedestrian or the like who collides with the vehicle; and
a flap provided on an outer periphery of the airbag that is folded that is able to control deployment behavior of the airbag; wherein
the flap has a weakened part that breaks or opens as the airbag expands and deploys, so that the airbag can deploy in a desired direction.

2. The pedestrian protection airbag device according to claim 1, wherein the weakened portion is formed in the vicinity of a rear region of the folded airbag.

3. The pedestrian protection airbag device according to claim 1, wherein the airbag includes a main chamber that can be deployed forward onto the hood from the boundary part, and the flap is configured to retain the main chamber without breaking or opening the weak portion until the main chamber reaches the hood as the airbag deploys.

4. The pedestrian protection airbag device according to claim 3, wherein the weakened part is formed in the vicinity of a front region of the main chamber of the folded airbag.

5. The pedestrian protection airbag device according to claim 4, wherein the weakened part is formed on an upper surface of the main chamber of the folded airbag.

6. The pedestrian protection airbag device according to claim 1, wherein the weakened part is a slit or a breakable sewing line.

7. The pedestrian protection airbag device according to claim 1, wherein the flap retains the airbag including a portion near a center of the airbag in the vehicle width direction.

8. The pedestrian protection airbag device according to any one of claims 3 to 7, wherein the airbag further comprises a sub-chamber connected to a lower part of the main chamber and deployed prior to the main chamber.

9. The pedestrian protection airbag device according to claim 8, wherein the sub-chamber and the main chamber are in fluid communication with each other through an inner vent.

10. The pedestrian protection airbag device according to claim 9, wherein the sub-chamber has a smaller volume than the main chamber and is configured to be deployed under the hood.

11. The pedestrian protection airbag device according to claim 8, wherein the main chamber is rolled or folded in a front-to-back direction, and the front and rear edges of the flap are connected to the front and rear edges of the sub-chamber by sewing.

12. The pedestrian protection airbag device according to claim 11, wherein the main chamber in a rolled or folded state is surrounded from the front-to-back direction by the flap and the sub-chamber.

13. The pedestrian protection airbag device according to claim 8, wherein the flap is configured to surround the main chamber and the sub-chamber in a rolled or folded state over the entire periphery in the front-to-back direction.

14. The pedestrian protection airbag device according to claim 8, wherein an area of a front region of the main chamber that is deployed onto the hood is larger than an area of an upper region of the main chamber that is deployed onto the windshield, and the front region and the upper region are rolled or folded separately.

15. The pedestrian protection airbag device according to claim 14, wherein the main chamber and the sub-chamber are folded or rolled separately.
